# EUROPÄISCHE PATENTSCHRIFT

(11) **EP 3 390 731 B1**
(45) Veröffentlichungstag und Bekanntmachung des Hinweises auf die Patenterteilung: **17.06.2020**
(21) Anmeldenummer: 16787802.4
(22) Anmeldetag: 25.10.2016
(51) Int. Cl.: E03C 1/04, F16L 59/00, F16L 41/02

(54) **VORRICHTUNG ZUR VERBINDUNG ZUMINDEST EINER ARMATUR UND EINER LEITUNG MIT THERMISCHER ENTKOPPLUNG**
FITTING FOR COUPLING AT LEAST ONE DEVICE AND SUPPLY LINE THERMICALLY ISOLATED TO EACH OTHER
DISPOSITIF POUR RELIER AU MOIN UNE ARMATURE ET UN TUYAU AVEC UN DÉCOUPLAGE THERMIQUE

(30) Priorität: 14.12.2015 DE 102015121696
(43) Veröffentlichungstag der Anmeldung: 24.10.2018
(73) Patentinhaber: Viega Technology GmbH & Co. KG, 57439 Attendorn (DE)
(72) Erfinder: KLOSTA, Tobias, 57076 Siegen (DE); SINOPLU, Sudi, 57439 Attendorn (DE); SCHULTE, Werner, 57368 Lennestadt (DE)
(74) Vertreter: Cohausz & Florack
(86) Internationale Anmeldenummer: PCT/EP2016/075652
(87) Internationale Veröffentlichungsnummer: WO 2017/102154

(56) Entgegenhaltungen:
- CH-A5- 634 137
- DE-A1- 3 821 372
- DE-U1- 9 316 978

## Beschreibung

Die Erfindung betrifft eine Vorrichtung zur Verbindung zumindest einer Armatur und einer Leitung, mit mindestens einem Zulauf, mit mindestens einem Ablauf, mit mindestens einem Anschluss und mit einem Innenkanal, welcher den Zulauf und den Ablauf durchströmbar verbindet, wobei eine Ableitung vorgesehen ist, welche den Innenkanal durchströmbar mit dem Anschluss verbindet. Weiter betrifft die Erfindung ein System mit zumindest einer erfindungsgemäßen Vorrichtung.

Insbesondere in der Hausinstallation von Trinkwasser- bzw. Heizungsleitungen werden Vorrichtungen der eingangs genannten Art verwendet, um eine Abzweigung von einer Strangleitung für den Anschluss einer Armatur bereitzustellen. In Systemen mit Kaltwasserleitungen und Warmwasserleitungen und daran angebundenen Armaturen, welche beispielsweise an Ausgussbecken, Duschen oder Badewannen der Wasserentnahme aus den Leitungen dienen, wird Wärme zwischen den Armaturen und den Leitungen übertragen. Hierbei wird die Armatur von der daran angeschlossenen Warmwasserleitung aufgeheizt bzw. von der Kaltwasserleitung abgekühlt. Insbesondere bei der Verwendung von Zirkulationsleitungen tritt dieser Effekt verstärkt auf, da hierbei die Warmwasserleitungen eine konstant hohe bzw. tiefe Temperatur aufweisen und Wärme an die Armatur oder von der Armatur übertragen wird.

Durch die Wärmeübertragung können jedoch Schäden an den Armaturen auftreten und deren Lebensdauer verkürzt werden. Dies kommt insbesondere bei Mischarmaturen vor, welche durch die gleichzeitige Anbindung an eine Warmwasserleitung und eine Kaltwasserleitung einem Temperaturgradienten ausgesetzt sind.

Weiter können auch hygienische Probleme in solchen System auftreten. Beispielsweise wird über die Armatur indirekt Wärme von der Warmwasserleitung auf die Kaltwasserleitung übertragen, womit die Temperatur in der Kaltwasserleitung zulässige Grenzwerte bezüglich Keimbildung überschreiten kann.

Der Erfindung liegt die Aufgabe zu Grunde, eine Vorrichtung zur Verbindung zumindest einer Armatur und einer Leitung und ein System hierzu anzugeben, mit welchen die Armatur geschont und die hygienischen Bedingungen verbessert werden.

Diese Aufgabe betreffend eine Vorrichtung wird dadurch gelöst, dass die Ableitung zumindest einen Abschnitt zur thermischen Entkopplung von Innenkanal und Anschluss aufweist.

Die Wärmeübertragung zwischen der Leitung, welche an den Zulauf bzw. den Ablauf der Vorrichtung angeschlossen werden kann, und der Armatur, welche am Anschluss angeschlossen werden kann, geschieht teilweise über das Material der Vorrichtung selbst. Dadurch, dass die Ableitung zumindest einen Abschnitt zur thermischen Entkopplung aufweist, wird diese Wärmeübertragung gemindert.

Somit tritt bei einer Warmwasserleitung eine wesentlich geringere Erwärmung der Armatur und bei einer Kaltwasserleitung eine wesentlich geringere Abkühlung der Armatur auf. Folglich wird eine angeschlossene Armatur geschont und hygienische Probleme können eingedämmt werden.

Die Vorrichtung kann hierbei als Wandscheibe bzw. Doppelwandscheibe ausgeführt sein und insbesondere Mittel zur Befestigung in oder an einer Wand aufweisen. Der Anschluss ist für die Anbindung einer Armatur geeignet und verfügt beispielsweise über ein Innengewinde oder Außengewinde. Zulauf und Ablauf können auch Mittel zur Verbindung mit Leitungselementen aufweisen, beispielsweise Innengewinde, Außengewinde oder Fittings wie Pressfittings.

Es ist denkbar, dass der Abschnitt zur thermischen Entkopplung aktiv gekühlt oder erwärmt wird.

In einer ersten Ausgestaltung der Vorrichtung weist der Abschnitt zur thermischen Entkopplung eine geringere Wärmeleitfähigkeit auf als die restliche Ableitung und/oder der Innenkanal. Der Teil der Vorrichtung, welcher den Innenkanal und die restlichen Abschnitte der Ableitung bildet, kann zum Beispiel im Wesentlichen aus Metall, insbesondere Rotguss oder Kupfer bestehen. Insbesondere sind der Innenkanal und insbesondere zumindest ein Teil der Ableitung dann als Gussteil oder Drehteil ausgebildet. Metalle wie Rotguss oder Kupfer haben eine vergleichsweise hohe Wärmeleitfähigkeit.

Weist nun der Abschnitt zur thermischen Entkopplung ein Material mit einer geringeren Wärmeleitfähigkeit auf, so wird die Wärmeübertragung entlang der Ableitung effektiv vermindert.

In einer Ausgestaltung der Vorrichtung besteht der Abschnitt zur thermischen Entkopplung zumindest teilweise aus Edelstahl, Kunststoff und/oder Keramik. Diese Materialien weisen beispielsweise im Vergleich zu Rotguss oder Kupfer eine geringere Wärmeleitfähigkeit auf. Zudem können diese Materialien auch für Trinkwasseranwendungen geeignet sein und somit einen breiten Anwendungsbereich der Vorrichtung gewährleisten. Als Kunststoffe können insbesondere Polybutylenterephthalat (PBT), Polyoxymethylen (POM), Polyamid (PA), Polyethylenterephthalat (PET) oder Polysulfon verwendet werden. Allgemein können thermoplastische Kunststoffe mit guten Festigkeitseigenschaften und hoher Temperaturbeständigkeit in bewehrter und unbewehrter Ausführung verwendet werden.

Der Abschnitt zur thermischen Entkopplung kann auch Teflon aufweisen, welches insbesondere auch zur Abdichtung des Übergangs des Abschnitts zur thermischen Entkopplung an die restliche Ableitung dienen kann. Teflon weist ebenfalls eine geringe Wärmeleitfähigkeit auf.

Der Abschnitt zur thermischen Entkopplung kann insbesondere durch eine Hülse gebildet werden. Dadurch kann die Vorrichtung auf einfache Weise hergestellt werden. Die Hülse wird beispielsweise mit der restlichen Ableitung über Innengewinde oder Außengewinde verschraubt. Die Hülse kann weiter ein Außenprofil, beispielsweise einen Sechskant aufweisen, um die Montage zu erleichtern.

Gemäß einer weiteren Ausgestaltung der Vorrichtung weist der Abschnitt zur thermischen Entkopplung entlang der Ableitung eine Länge auf, welche zumindest der Hälfte eines Durchmessers des Innenkanals entspricht. Vorzugsweise entspricht die Länge zumindest dem Durchmesser des Innenkanals. Durch die Verwendung eines entsprechend langen Abschnitts zur thermischen Entkopplung wird die Wärmeleitfähigkeit der Ableitung weiter vermindert, wobei die genannte Mindestlänge einen guten Kompromiss aus thermischer Entkopplung und möglichst kompakter und stabiler Geometrie bildet. Als maximale Länge kann das 5-fache, insbesondere das 2-fache des Durchmessers des Innenkanals gegeben sein.

Generell können auch mehrere Abschnitte zur thermischen Entkopplung vorgesehen sein, wobei dann die Gesamtlänge, d.h. die Summe der Längen der jeweiligen Abschnitte, maßgeblich sein kann.

Weiter denkbar ist es, gewisse Mindestlängen und Maximallängen des Abschnitts zur thermischen Entkopplung anhand der Wandstärke oder des Materials der Ableitung festzulegen.

Gemäß einer weiteren Ausgestaltung der Vorrichtung ist ein Mittel zur strömungstechnischen Entkopplung von Innenkanal und Ableitung vorgesehen. Neben der bereits oben beschriebenen thermischen Kopplung durch die Ableitung selbst wird auch bei Verwendung der Vorrichtung Wärme über das in der Vorrichtung strömende Wasser übertragen. Mittel zur strömungstechnischen Entkopplung von Innenkanal und Ableitung können den Wasseraustausch zwischen dem Innenkanal und der Ableitung vermindern und dadurch diese Wärmeübertragung eindämmen.

Mittel zur strömungstechnischen Entkopplung von Innenkanal und Ableitung können auch unabhängig von dem zuvor beschriebenen Abschnitt zu thermischen Entkopplung vorgesehen sein. In einer bevorzugten Ausgestaltung der Vorrichtung ist das Mittel zur strömungstechnischen Entkopplung jedoch mit zumindest einem Abschnitt zur thermischen Entkopplung vorteilhaft kombiniert. Es hat sich herausgestellt, dass durch diese Kombination eine besonders effektive Unterdrückung der Wärmeübertragung zwischen einer angeschlossenen Armatur und der Leitung bzw. dem Innenkanal bewirkt werden kann.

Das Mittel zur strömungstechnischen Entkopplung umfasst beispielsweise einen Rückflussverhinderer bzw. ein Rückflussventil, welches lediglich einen Wasserfluss vom Innenkanal in die Ableitung bei Nutzung der Armatur erlaubt und einen Rückfluss unterdrückt. Alternativ oder zusätzlich können Lamellen oder Leitbleche im Innenkanal und/oder in der Ableitung vorgesehen sein, welche eine bessere Strömungsfähigkeit innerhalb des Innenkanals gewährleisten und gleichzeitig den Wasseraustausch mit der Ableitung vermindern.

In einer Ausgestaltung der Vorrichtung weisen die Oberflächen des Innenkanals und Ableitung als Mittel zur strömungstechnischen Entkopplung verschiedene Rauigkeiten auf. Dadurch kann auch eine Strömung innerhalb des Innenkanals begünstigt und ein Austausch mit der Ableitung vermindert werden. Möglich ist hierbei, die Oberflächen von Innenkanal und Ableitung durch deren Herstellung, beispielsweise im Guss, unterschiedlich aufzurauen. Auch kann eine mechanische oder chemische Aufrauung vorgesehen sein oder eine oder mehrere Oberflächenbeschichtungen aufgebracht werden.

In einer weiteren Ausgestaltung der Vorrichtung umfasst das Mittel zur strömungstechnischen Entkopplung ein Bogenstück. Durch ein Bogenstück kann auch auf einfache Weise ein strömungstechnischer Effekt herbeigeführt werden, der eine Strömung innerhalb des Innenkanals begünstigt und ein Austausch mit der Ableitung vermindert.

Insbesondere kann der Innenkanal näherungsweise in einer Ebene verlaufen. Der Innenkanal kann gerade ausgeführt sein. Insbesondere verläuft der Innenkanal jedoch bogenförmig. Beispielsweise beschreibt der Innenkanal eine U-Form, so dass Zulauf und Ablauf insbesondere im Wesentlichen parallel zueinander stehen, d.h. angeschlossene Leitungen einen Winkel von 150° bis 210° zueinander haben. Dadurch können günstige Strömungsbedingungen innerhalb des Innenkanals bewirkt werden. Das Bogenstück kann die Ableitung aus der Ebene, in welcher der Innenkanal verläuft, herausführen. Damit wird ein Wasseraustausch zwischen dem Innenkanal und der Ableitung unterdrückt.

Das Bogenstück kann insbesondere einen Winkel von mehr als 45°, bevorzugt mehr als 70° bereitstellen. Vorzugsweise liegt der Winkel des Bogenstücks zwischen 70° und 110°, so dass die Vorrichtung ermöglicht, eine Armatur in einem im wesentlichen rechten Winkel zu einer Leitung anzubringen.

In einer weiteren Ausgestaltung der Vorrichtung ist das Bogenstück zwischen dem Abschnitt zur thermischen Entkopplung und dem Anschluss angeordnet. Hierdurch kann eine bessere Entkopplung und eine kompaktere Bauweise erreicht werden.

Gemäß einer weiteren Ausgestaltung der Vorrichtung weist die Ableitung vom Innenkanal zum Anschluss eine Länge auf, welche zumindest dem 3-fachen eines Durchmessers des Innenkanals, vorzugsweise zumindest dem 5-fachen des Durchmessers des Innenkanals entspricht. Bereits mit einer entsprechenden Mindestlänge der Ableitung kann ein vorteilhaftes Mittel zur strömungstechnischen Entkopplung von Innenkanal und Ableitung bereitgestellt werden, da mit der Länge der Ableitung auch der Strömungswiderstand ansteigt.

Um eine kompakte Geometrie und einen ausreichenden Wasserfluss zur Armatur zu gewährleisten, entspricht die Länge der Ableitung vom Innenkanal zum Anschluss jedoch insbesondere jedoch höchstens dem 15-fachen des Durchmessers des Innenkanals, bevorzugt höchstens dem 10-fachen des Durchmessers des Innenkanals.

Gemäß einer weiteren Ausgestaltung der Vorrichtung weist die Ableitung einen Querschnitt auf, welcher höchstens 90%, vorzugsweise höchstens 75% des Querschnitts des Innenkanals beträgt. Durch eine Verringerung des Querschnitts der Ableitung im Vergleich zum Innenkanal wird der Strömungswiderstand in der Ableitung ebenfalls erhöht und eine Durchmischung des Wassers im Innenkanal mit dem Wasser in der Ableitung verringert.

Weiter denkbar ist es, gewisse Mindestlängen und Maximallängen der Ableitung anhand der Wandstärke oder des Materials der Ableitung festzulegen.

Gemäß einer weiteren Lehre wird die oben genannte Aufgabe mit einem System mit zumindest einer zuvor beschriebenen Vorrichtung und mit zumindest einer Leitung, welche an den Zulauf und den Ablauf angeschlossen ist und teilweise durch den Innenkanal verläuft, gelöst. Insbesondere handelt es sich bei dem System um ein Trinkwassersystem. Die Leitung ist insbesondere als Zirkulationsleitung ausgestaltet.

Insbesondere ist zumindest eine Armatur vorgesehen, welche mit dem Anschluss verbunden ist.

Wie zuvor beschrieben tritt bei der Verwendung der Vorrichtung in einem System beispielsweise im Zusammenhang mit einer Warmwasserleitung eine wesentlich geringere Erwärmung der Armatur und bei einer Kaltwasserleitung eine wesentlich geringere Abkühlung der Armatur auf. Folglich wird die Armatur geschont und hygienische Probleme können eingedämmt werden.

In einer Ausgestaltung des Systems ist zumindest eine Kaltwasserleitung und zumindest eine Warmwasserleitung vorgesehen und zumindest eine Mischarmatur für Warmwasser und Kaltwasser ist über die Vorrichtung an die Kaltwasserleitung und die Warmwasserleitung angebunden. Gerade bei Mischarmaturen für Kaltwasser und Warmwasser können große Temperaturgradienten in der Armatur auftreten, welche die Lebensdauer der Armatur verkürzen. Durch die zuvor beschriebene Vorrichtung können solche Probleme verringert werden.

Gemäß einer weiteren Lehre wird die oben genannte Aufgabe mit einer Verwendung einer zuvor beschriebenen Vorrichtung in einem Wassersystem zur Verbindung zumindest einer Armatur und zumindest einer Leitung gelöst.

Bezüglich weiterer Vorteile und Ausgestaltungen des Systems und der Verwendung wird auf die obigen Ausführungen zur Vorrichtung verwiesen. Zudem wird Bezug genommen auf die nachfolgende Beschreibung der Zeichnung. In der Zeichnung zeigen:
- Fig. 1: ein erstes Ausführungsbeispiel einer Vorrichtung in einer perspektivischen Ansicht,
- Fig. 2: ein zweites Ausführungsbeispiel einer Vorrichtung in einer perspektivischen Ansicht und
- Fig. 3: ein Ausführungsbeispiel eines Systems in einer schematischen Darstellung.

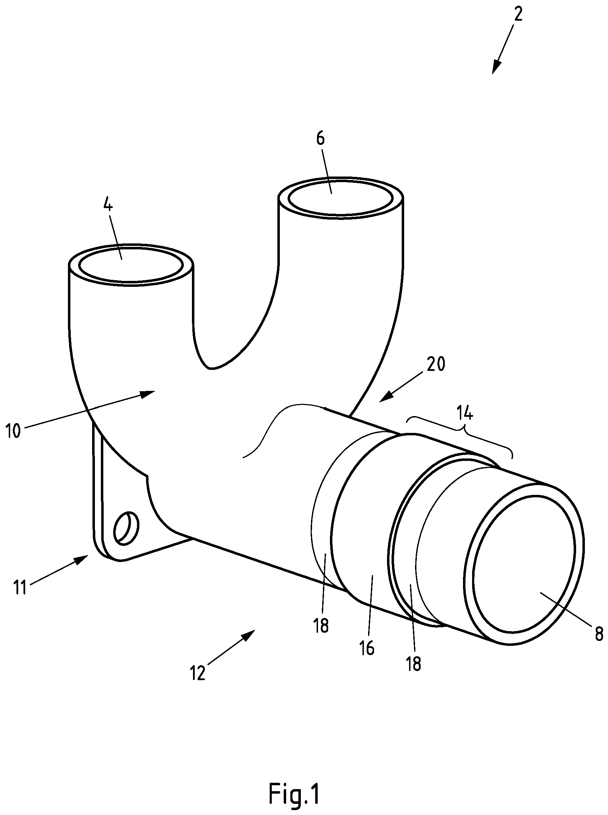

Fig. 1 zeigt ein erstes Ausführungsbeispiel einer Vorrichtung 2 in einer perspektivischen Ansicht. Die Vorrichtung 2 weist einen Zulauf 4 und einen Ablauf 6 sowie einen Anschluss 8 auf. Der Anschluss 8 ist für die Anbindung einer Armatur (nicht gezeigt) eingerichtet und verfügt beispielsweise über ein Innengewinde oder Außengewinde. Zulauf 4 und Ablauf 6 können auch Mittel zur Verbindung mit Leitungselementen aufweisen (nicht gezeigt), beispielsweise Innengewinde, Außengewinde oder Fittings wie Pressfittings.

Die Vorrichtung 2 weist einen Innenkanal 10 auf, welcher Zulauf 4 und Ablauf 6 durchströmbar verbindet. Ein U-Stück aus Rotguss ist vorgesehen, welcher den Innenkanal 10 aufweist und eine im wesentlichen parallele Ausrichtung von Leitungselementen, welche an Zulauf 4 und Ablauf 6 angeschlossen werden können, zulässt. Die Vorrichtung 2 ist als Doppelwandscheibe ausgeführt, welche Mittel zur Befestigung 11 aufweist, hier in Form einer Grundplatte mit mindestens einem Loch.

Eine Ableitung 12 ist vorgesehen, welche den Innenkanal 10 durchströmbar mit dem Anschluss 8 verbindet. Auf diese Weise kann ein Rohrleitungssystem wie eine Zirkulationsleitung, welche an Zulauf 4 und Ablauf 6 und teilweise durch den Innenkanal 10 verläuft, mit einer am Anschluss 8 angeordneten Armatur durchströmbar verbunden werden.

Die Ableitung 12 weist einen Abschnitt 14 zur thermischen Entkopplung auf. Der Abschnitt 14 umfasst eine Hülse 16, welche aus Edelstahl, Kunststoff und/oder Keramik besteht und über Gewinde mit der restlichen Ableitung 12 verbunden ist. Die Gewinde sind zusätzlich über Teflonschichten 18 gesichert bzw. abgedichtet. Dadurch, dass der Abschnitt 14 im wesentlichen aus Edelstahl, Kunststoff und/oder Keramik besteht, welche eine geringere thermische Leitfähigkeit aufweisen als das Material der restlichen Ableitung 12 bzw. des Innenkanals 10, hier beispielsweise Rotguss oder Kupfer, werden Innenkanal 10 und Anschluss 8 thermisch entkoppelt. Die thermische Entkopplung wird weiter durch die Teflonschichten 18 unterstützt. Der Abschnitt 14 weist hierbei entlang der Ableitung 12 eine Länge auf, welche zumindest dem Durchmesser des Innenkanals entspricht.

Es findet damit eine deutlich geringere Wärmeübertragung über das Material der Vorrichtung 2 statt, als wenn beispielsweise die gesamte Vorrichtung 2 aus Rotguss hergestellt wäre.

Weiter sind Mittel zur strömungstechnischen Entkopplung von Innenkanal 10 und Ableitung 12 vorgesehen. Die Vorrichtung 2 weist ein Bogenstück 20 auf, welches die Ableitung 12 aus einer Ebene, in welcher der Innenkanal verläuft, herausführt. Hier bewirkt das Bogenstück 20 einen Winkel von über 45° bzw. über 80° zwischen der Ableitung 12 und der Ebene des Innenkanals 10. Das Bogenstück 20 ist hier zwischen dem Abschnitt 14 zur thermischen Entkopplung und dem Innenkanal 10 angeordnet. Durch das Bogenstück 20, insbesondere in Verbindung mit dem als U-Stück ausgeführten Innenkanal 10, wird eine Durchmischung des durch den Innenkanal 10 laufenden Wassers, beispielsweise in einer Zirkulationsleitung, mit dem in der Ableitung 12 befindlichen Wasser unterdrückt, so dass eine Wärmeübertragung zwischen Innenkanal und Anschluss 12 weiter vermindert wird.

Zusätzlich weist die Ableitung 12 vom Innenkanal 10 zum Anschluss 8 eine Länge auf, welche zumindest dem 3-fachen eines Durchmessers des Innenkanals 10 entspricht. Durch diese Dimensionierung werden Innenkanal 10 und Ableitung 12 weiter strömungstechnisch entkoppelt.

Durch den Abschnitt 14 zur thermischen Entkopplung, insbesondere in der Kombination mit den beschriebenen Mitteln zur strömungstechnischen Entkopplung, wird beim Betrieb einer Armatur am Anschluss 8 die Armatur weitgehend von einer durch den Innenkanal 10 laufenden Leitung entkoppelt. Somit tritt bei einer Warmwasserleitung eine wesentlich geringere Erwärmung der Armatur und bei einer Kaltwasserleitung eine wesentlich geringere Abkühlung der Armatur auf. Damit wird die Armatur geschont und hygienische Probleme können eingedämmt werden.

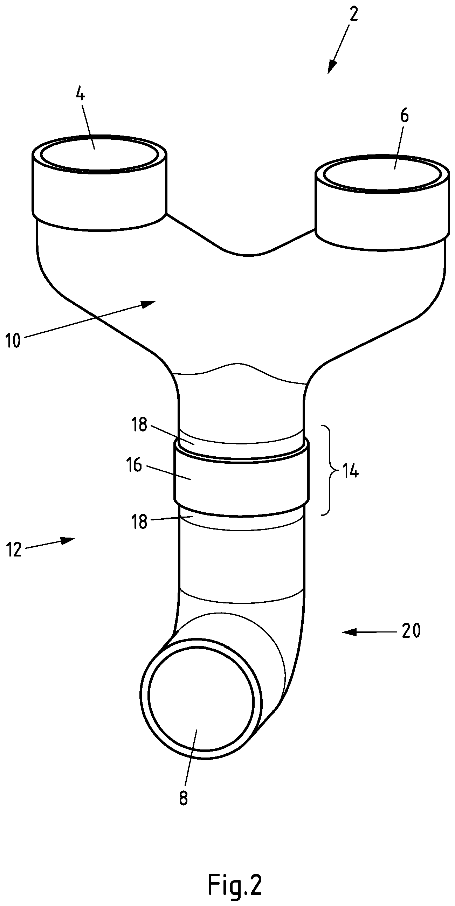

Fig. 2 zeigt ein zweites Ausführungsbeispiel einer Vorrichtung 2 in einer perspektivischen Ansicht. Die gleichen Bezugszeichen wie in Fig. 1 wurden für einander entsprechende Elemente verwendet.

Ein wesentlicher Unterschied zum Ausführungsbeispiel aus Fig. 1 ist die Position des Bogenstücks 20. Das Bogenstück 20 ist zwischen dem Abschnitt 14 zur thermischen Entkopplung und dem Anschluss 8 angeordnet. Weiter ist die Länge der Ableitung vom Innenkanal zum Anschluss größer gewählt. Diese Länge entspricht hier zumindest dem 5-fachen des Durchmessers des Innenkanals 10. Hierdurch kann die Wärmeübertragung zwischen einer Armatur am Anschluss 8 und einer durch den Innenkanal 10 laufenden Leitung weiter vermindert werden.

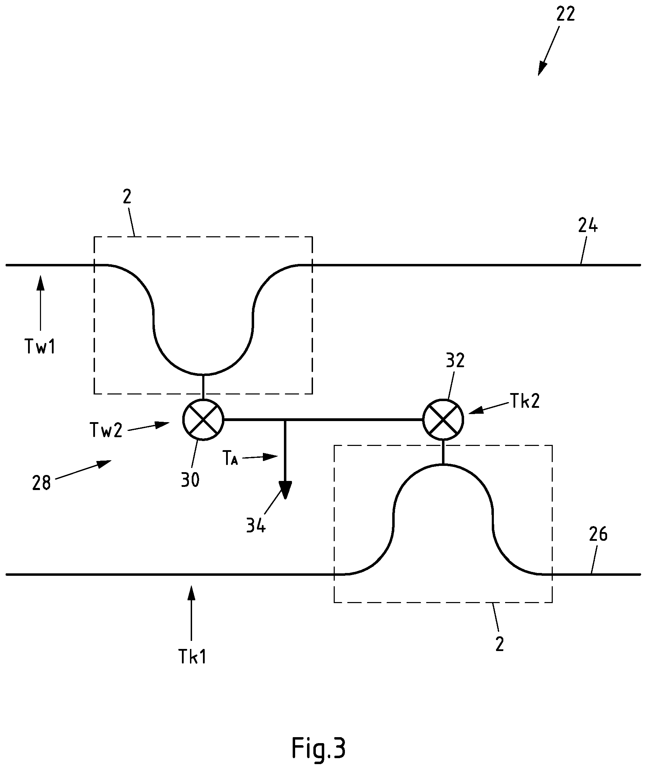

Fig. 3 zeigt ein Ausführungsbeispiel eines Systems 22 in einer schematischen Darstellung. Eine Warmwasserleitung 24 und eine Kaltwasserleitung 26, welche beide als Zirkulationsleitung ausgeführt sind, sind über jeweils eine zuvor beschriebene Vorrichtung 2 an eine Armatur 28 angeschlossen. Die Armatur 28 ist als Mischarmatur ausgeführt und verfügt über ein Warmwasserregelventil 30 sowie ein Kaltwasserregelventil 32, welche Wasser einem Auslauf 34 zuführen können.

Durch die Verwendung der Vorrichtungen 2 wird die Temperatur der Armatur 28 weitgehend von den Temperaturen innerhalb der Warmwasserleitung 24 und Kaltwasserleitung 26 entkoppelt, was sowohl die Armatur 28 weniger belastet als auch hygienische Probleme eindämmt.

Zur Demonstration dieses Effekts wurden Versuche gemacht, bei denen in Fig. 3 gezeigte Systeme jeweils mit den Ausführungsbeispielen der Vorrichtung 2 aus den Fig. 1 und 2 mit Zirkulationsleitungen betrieben wurden. Der Auslauf 34 wurde hierbei nicht betätigt und gewartet, bis sich ein thermisches Gleichgewicht eingestellt hatte.

Die nachfolgend in Tab. 1 gezeigten Temperaturen wurden dabei an denen in Fig. 3 gekennzeichneten Punkten gemessen:

**Tabelle 1**

| Vorrichtung 2 | T_{K1} (°C) | T_{K2}(°C) | T_{W1} (°C) | T_{W2} (°C) | T_{A} (°C) |
|---|---|---|---|---|---|
| Fig. 1 | 25,9 | 32,2 | 58,0 | 49,5 | 30,2 |
| Fig. 2 | 25,9 | 23,0 | 58,0 | 25,6 | 23,0 |

Es lässt sich erkennen, dass mit dem Ausführungsbeispiel aus Fig. 1 die Temperatur am Warmwasserregelventil T_{W2} und am Auslauf T_{A} im Vergleich zur Temperatur in der Warmwasserleitung T_{W1} erniedrigt werden konnte. Gleichfalls war die Temperatur am Kaltwasserregelventil T_{K2} und am Auslauf T_{A} im Vergleich zur Temperatur in der Kaltwasserleitung T_{K1} nur geringfügig erhöht.

Mit dem Ausführungsbeispiel aus Fig. 2 konnte sogar erreicht werden, dass die Temperaturen an den Regelventilen T_{K2} und T_{W2} sowie am Auslauf T_{A} nahe der Raumtemperatur lagen. Somit wurde eine praktisch vollständige Entkopplung der Armatur 28 von den Leitungen 24, 26 erreicht werden.

## Patentansprüche

1. Vorrichtung zur Verbindung zumindest einer Armatur und einer Leitung,
- mit mindestens einem Zulauf (4),
- mit mindestens einem Ablauf (6),
- mit mindestens einem Anschluss (8) und
- mit einem Innenkanal (10), welcher den Zulauf (4) und den Ablauf (6) durchströmbar verbindet,
- wobei eine Ableitung (12) vorgesehen ist, welche den Innenkanal (10) durchströmbar mit dem Anschluss (8) verbindet,
**dadurch gekennzeichnet,**
- **dass** die Ableitung (12) zumindest einen Abschnitt zur thermischen Entkopplung (14) von Innenkanal (10) und Anschluss (8) aufweist.

2. Vorrichtung nach Anspruch 1,
**dadurch gekennzeichnet,**
**dass** der Abschnitt zur thermischen Entkopplung (14) eine geringere thermische Leitfähigkeit aufweist als die restliche Ableitung (12) und/oder der Innenkanal (10).

3. Vorrichtung nach Anspruch 1 oder 2,
**dadurch gekennzeichnet,**
**dass** der Abschnitt zur thermischen Entkopplung (14) zumindest teilweise aus Edelstahl, Kunststoff oder Keramik besteht.

4. Vorrichtung nach einem der Ansprüche 1 bis 3,
**dadurch gekennzeichnet,**
**dass** der Abschnitt zur thermischen Entkopplung (14) entlang der Ableitung eine Länge aufweist, welche zumindest der Hälfte eines Durchmessers des Innenkanals (10), vorzugsweise zumindest dem Durchmesser des Innenkanals (10) entspricht.

5. Vorrichtung nach einem der Ansprüche 1 bis 4,
**dadurch gekennzeichnet,**
**dass** ein Mittel zur strömungstechnischen Entkopplung (20) von Innenkanal (10) und Ableitung (12) vorgesehen ist.

6. Vorrichtung nach Anspruch 5,
**dadurch gekennzeichnet,**
**dass** das Mittel zur strömungstechnischen Entkopplung ein Bogenstück (20) umfasst, welches insbesondere die Ableitung (12) aus einer Ebene, in welcher der Innenkanal (10) verläuft, herausführt.

7. Vorrichtung nach Anspruch 5 oder 6,
**dadurch gekennzeichnet,**
**dass** die Ableitung (12) vom Innenkanal (10) zum Anschluss (8) eine Länge aufweist, welche zumindest dem 3-fachen eines Durchmessers des Innenkanals (10), vorzugsweise zumindest dem 5-fachen des Durchmessers des Innenkanals (10) entspricht.

8. System
- mit zumindest einer Vorrichtung (2) nach einem der Ansprüche 1 bis 7 und
- mit zumindest einer Leitung (24, 26), welche an den Zulauf (4) und den Ablauf (6) angeschlossen ist und teilweise durch den Innenkanal (10) verläuft.

9. System nach Anspruch 8,
**dadurch gekennzeichnet,**
- **dass** zumindest eine Kaltwasserleitung (24) und zumindest eine Warmwasserleitung (26) vorgesehen ist und
- **dass** zumindest eine Mischarmatur (28) für Warmwasser und Kaltwasser über die Vorrichtung (2) an die Kaltwasserleitung (24) und die Warmwasserleitung (26) angebunden ist.

10. Verwendung einer Vorrichtung (2) nach einem der Ansprüche 1 bis 7 in einem Wassersystem (22) zur Verbindung zumindest einer Armatur (28) und zumindest einer Leitung (24, 26).

## Claims

1. Device for connecting at least one tap and a pipe,
- having at least one inlet (4),
- having at least one outlet (6),
- having at least one connection (8) and
- having an inner channel (10) which connects the inlet (4) and the outlet (6) so as to be able to be flowed through,
- wherein there is provided a drain (12) which connects the inner channel (10) to the connection (8) so as to be able to be flowed through,
**characterised in that**
- the drain (12) has at least one portion for thermal decoupling (14) from the inner channel (10) and connection (8).

2. Device according to claim 1,
**characterised in that**
the portion for thermal decoupling (14) has a lower thermal conductivity than the remaining drain (12) and/or the inner channel (10).

3. Device according to claim 1 or 2,
**characterised in that**
the portion for thermal decoupling (14) comprises at least partially high-grade steel, plastics material or ceramic material.

4. Device according to any one of claims 1 to 3,
**characterised in that**
the portion for thermal decoupling (14) along the drain has a length which corresponds to at least half of a diameter of the inner channel (10), preferably at least the diameter of the inner channel (10).

5. Device according to any one of claims 1 to 4,
**characterised in that**
a means for decoupling (20) the inner channel (10) and drain (12) in technical flow terms is provided.

6. Device according to claim 5,
**characterised in that**
the means for decoupling in technical flow terms comprises a curved piece (20) which in particular guides the drain (12) out of a plane in which the inner channel (10) extends.

7. Device according to claim 5 or 6,
**characterised in that**
the drain (12) from the inner channel (10) to the connection (8) has a length which corresponds to at least 3 times a diameter of the inner channel (10), preferably at least 5 times the diameter of the inner channel (10).

8. System
- having at least one device (2) according to any one of claims 1 to 7, and
- having at least one pipe (24, 26) which is connected to the inlet (4) and the outlet (6) and which extends partially through the inner channel (10).

9. System according to claim 8,
**characterised in that**
- at least one cold water pipe (24) and at least one hot water pipe (26) are provided and
- **in that** at least one mixing tap (28) for hot water and cold water is connected via the device (2) to the cold water pipe (24) and the hot water pipe (26).

10. Use of a device (2) according to any one of claims 1 to 7 in a water system (22) for connecting at least one tap (28) and at least one pipe (24, 26).

## Revendications

1. Dispositif de connexion d'au moins un robinet et d'une conduite,
- avec au moins une alimentation (4),
- avec au moins une sortie (6),
- avec au moins un raccord (8) et
- avec un canal intérieur (10), qui relie en écoulement l'alimentation (4) et la sortie (6),
- où une dérivation (12) est prévue, laquelle relie en écoulement le canal intérieur (10) au raccord (8),
**caractérisé en ce que**
- la dérivation (12) présente au moins une section pour le découplage thermique (14) du canal intérieur (10) et du raccord (8).

2. Dispositif selon la revendication 1, **caractérisé en ce que** la section pour le découplage thermique (4) présente une conductibilité thermique plus faible que le reste de la dérivation (12) et/ou que le canal intérieur (10).

3. Dispositif selon la revendication 1 ou 2, **caractérisé en ce que** la section pour le découplage thermique (4) se compose au moins partiellement d'acier inoxydable, d'une matière plastique ou d'une céramique.

4. Dispositif selon l'une des revendications 1 à 3, **caractérisé en ce que** la section pour le découplage thermique (4) présente le long de la dérivation, une longueur qui correspond au moins à la moitié du diamètre du canal intérieur (10), de préférence au moins le diamètre du canal intérieur (10).

5. Dispositif selon l'une des revendications 1 à 4, **caractérisé en ce qu'**un moyen pour le découplage en écoulement du canal intérieur (10) et de la dérivation (12) est prévu.

6. Dispositif selon la revendication 5, **caractérisé en ce que** le moyen pour le découplage en écoulement comprend un coude (20) qui conduit en particulier la dérivation (12) en dehors d'un plan dans lequel s'étend le canal intérieur (10).

7. Dispositif selon la revendication 5 ou 6, **caractérisé en ce que** la dérivation (12) présente entre le canal intérieur (10) et le raccord (8), une longueur qui correspond à au moins 3 fois le diamètre du canal intérieur (10), de préférence au moins 5 fois le diamètre du canal intérieur (10).

8. Système
- avec au moins un dispositif (2) selon l'une des revendications 1 à 7,
- avec au moins une conduite (24, 26) qui est raccordée à l'alimentation (4) et à la sortie (6) et qui s'étend partiellement dans le canal intérieur (10).

9. Système selon la revendication 8, **caractérisé en ce que**
- au moins une conduite d'eau froide (24) et au moins une conduite d'eau chaude (26) sont prévues, et
- au moins un mitigeur (24) pour l'eau chaude et l'eau froide est relié par le dispositif (2) à la conduite d'eau froide (24) et à la conduite d'eau chaude (26).

10. Utilisation d'un dispositif selon l'une des revendications 1 à 7, dans un système aqueux (22) pour relier au moins un robinet (28) et au moins une conduite (24, 26).
